# EUROPÄISCHE PATENTSCHRIFT

(11) **EP 0 522 268 B1**
(45) Veröffentlichungstag und Bekanntmachung des Hinweises auf die Patenterteilung: **03.01.1996**
(21) Anmeldenummer: 92108377.0
(22) Anmeldetag: 18.05.1992
(51) Int. Cl.: A01F 12/44, A01F 7/06

(54) **Axialabscheider**
Axial separator
Séparateur axial

(30) Priorität: 10.05.1991 US 698760
(43) Veröffentlichungstag der Anmeldung: 13.01.1993
(73) Patentinhaber: DEERE & COMPANY, Moline, Illinois 61265 (US)
(72) Erfinder: Jensen, Roderick James, Moline, Illinois 61265 (US); Gerber, Edwin Milton, Hooppole, Illinois 61258 (US); Day, Richard Loran, Port Byron, Illinois 61275 (US)
(74) Vertreter: Feldmann, Bernhard

(56) Entgegenhaltungen:
- WO-A-79/00547
- FR-A- 2 589 035
- US-A- 3 122 499
- US-A- 3 696 815
- US-A- 4 611 605
- US-A- 4 672 981
- US-A- 4 739 773
- US-A- 4 969 853

## Beschreibung

Die Erfindung betrifft einen Axialabscheider mit einem Gehäuse und einem darin drehbar gelagerten und auf seinem Umfang mit Zinken oder dergleichen bestückten Rotor, wobei an der Innenseite des Gehäuses Leitschienen vorgesehen sind, die unterschiedlich geneigt zur quer zur Drehachse verlaufenden Achse des Rotors verlaufen, und Deckplatten.

Die US-A-4,611,605 offenbart einen Mähdrescher in der sogenannten Hybridbauweise, bei der auf eine quer zur Fahrtrichtung angeordnete herkömmliche Dreschtrommel ein sich in der Fahrtrichtung erstreckender Axialabscheider folgt. Von einem Schneidwerk oder dergleichen aufgenommenes Erntegut wird in der herkömmlichen Dreschvorrichtung im wesentlichen ausgedroschen und anschließend dem Axialabscheider aufgegeben, damit in dem Dreschgut gegebenenfalls noch enthaltene Körner abgeschieden werden können. Zu diesem Zweck enthält der Axialabscheider zwei sich in Fahrtrichtung erstreckende und nebeneinander gelegene Rotoren, auf deren Umfangsfläche Zinken angebracht sind, die das Dreschgut erfassen. Die Rotoren sind jeweils in einem eigenen Gehäuse koaxial oder parallelachsig drehbar gelagert. An der den Rotoren zugelegen Innenfläche des Gehäuses sind spiralförmige Leitschienen vorgesehen, die das Dreschgut von einer Zufuhrzone einer Abgabezone zuleiten. Die Leitschienen sind in bezug auf eine quer zur Drehachse der Rotoren verlaufende Achse unterschiedlich geneigt angeordnet, um das Dreschgut entsprechend den Funktionen in den jeweiligen Abschnitten des Gehäuses längere oder kürzere Zeit zu halten.

Ein derartiges Gehäuse ist jeweils nur für ein spezielles Erntegut geeignet und darüberhinaus wartungsnachteilig.

Die der Erfindung zugrunde liegende Aufgabe wird darin gesehen, einen für alle, jedenfalls aber für viele Erntegüter brauchbaren Axialabscheider vorzuschlagen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln und in den Patentansprüchen 15 bis 21 vorteilhafte Ausbildungen einer Deckplatte angegeben sind, die sich für die Verwendung in einem Axialabscheider eignen.

Auf diese Weise kann der Axialabscheider durch den Austausch der Deckplatten für die Abscheidung von Erntegut verschiedener Erntegüter in kürzester Zeit gerüstet werden. Auch für die Wartung des Rotors ist es vorteilhaft, wenn zu wartende Bereiche durch eine einfache Demontage wenigstens einer Deckplatte zugänglich sind. Da die Deckplatten wahlweise mit Leitschienen unterschiedlicher Neigung, erforderlichenfalls sogar unterschiedlicher Höhe und unterschiedlichem Material besetzt werden können, ist eine optimale Anpassung des Axialabscheiders an das zu erntende Dreschgut gewährleistet.

Verstopfungen in einer Zufuhrzone und eine ausreichend lange Verweildauer in einer Abscheidezone werden gewährleistet, wenn in der ersten eine große Axialbewegung und in der zweiten eine geringe Axialbewegung pro Umdrehung infolge der Neigung der Leitschienen erzeugt wird.

Eine optimale Anordnung der Leitschienen wird erreicht, wenn diese unter den angegebenen Winkeln angeordnet werden.

Die Verwendung mehrerer Deckplatten auf der Länge des Gehäuses und somit auch des Rotors hat den Vorteil, daß diese ein geringes Gewicht haben und somit leicht und von Hand beweglich sind, daß ein noch gezielteres Eingehen auf die Erfordernisse in den jeweiligen Abschnitten des Rotors möglich ist und daß im Falle einer Wartung der betreffende Bereich anstatt des gesamten Rotors offengelegt werden kann.

Günstigerweise sind die Längenabmessungen der Deckplatten auf die Länge der Zufuhr- und der Abscheidezone abgestimmt, weil in diesen die Neigung normalerweise gleich bleibt.

Die Verwendung von Deckflanschen zwischen den Deckplatten erhöht deren Stabilität und verhindert das Ausdringen von Spreu und Staub, die ansonsten zu unerwünschten Materialansammlungen oberhalb des Axialabscheiders führen können.

Die Austauschbarkeit der Deckplatten, insbesondere in der Abscheidezone, vermeidet Probleme bei deren Einbau.

Spiralförmig verlaufende Leitschienen führen zu einem störungsfreien und widerstandsarmen Transport des Ernteguts.

Die Deckplatten sind leicht handhabbar, wenn sie mit Handgriffen versehen sind.

Deckplatten mit Leitschienen, gegebenenfalls verschiedene Deckplatten mit unterschiedlich geneigten Leitschienen können als eigenständige Einheit serienmäßig hergestellt und erforderlichenfalls in Einzelfertigung für eine bestimmte Erntesituation geschaffen werden. Derartige Deckplatten können sowohl in dafür geschaffene Gehäuse als auch in nachträglich dafür hergerichtete Gehäuse eingebaut werden. Vorzugsweise bedecken diese Deckplatten den oben liegenden Bereich des Gehäuses; dies stellt allerdings keine Beschränkung dar. Vielmehr können auch an der Unterseite oder in einem Seitenbereich des Gehäuses auswechselbare Deckplatten vorgesehen werden.

Die Befestigung der Deckplatten erfolgt vorzugsweise an radial nach außen weisenden Befestigungsflanschen, da diese nicht in den Materialflußbereich eingreifen und leicht mit Schrauben an dem Gehäuse oder untereinander festlegbar sind.

Die Deckplatten können nach einem feststehenden Schema im voraus serienmäßig so hergestellt werden, daß mit einem Satz an Deckplatten der Axialabscheider schnell auf die verschiedensten Güter eingestellt werden kann.

In der Zeichnung ist ein nachfolgend näher beschriebenes Ausführungsbeispiel der Erfindung dargestellt. Es zeigt:
- Fig. 1: einen Mähdrescher in Seitenansicht und schematischer Darstellung mit einer quer gelagerten Dreschtrommel und einem Axialabscheider,
- Fig. 2a und 2b: Ausschnitte eines Dreschsystems und des Axialabscheiders in perspektivischer Darstellung,
- Fig. 3a und 3b: eine Seitenansicht eines Rotors des Axialabscheiders,
- Fig. 4: den Rotor in Vorderansicht,
- Fig. 5: den Rotor von hinten betrachtet,
- Fig. 6: ein den Rotor aufnehmendes Gehäuse in einem vertikalen Schnitt durch seine Abscheidezone,
- Fig. 7: das Gehäuse aus Fig. 6 in Draufsicht mit Angabe der Lage von Leitschienen,
- Fig. 8: einen mit dem Gehäuse verbundenen Abscheiderost mit Angabe der Stellen, an denen Fingerroste vorgesehen oder die verschlossen sind,
- Fig. 9: den rückwärtigen Bereich des Axialabscheiders mit einer Abgabevorrichtung in Seitenansicht,
- Fig. 10: einen Deflektor im rückwärtigen Bereich von innen gesehen,
- Fig. 11: eine bevorzugte Ausbildung eines Zinkens und einer Zinkenbefestigungsvorrichtung in Draufsicht und
- Fig. 12: eine bevorzugte Ausbildung des Zinkens und der Zinkenbefestigungsvorrichtung in Vorderansicht.

### Mähdrescher

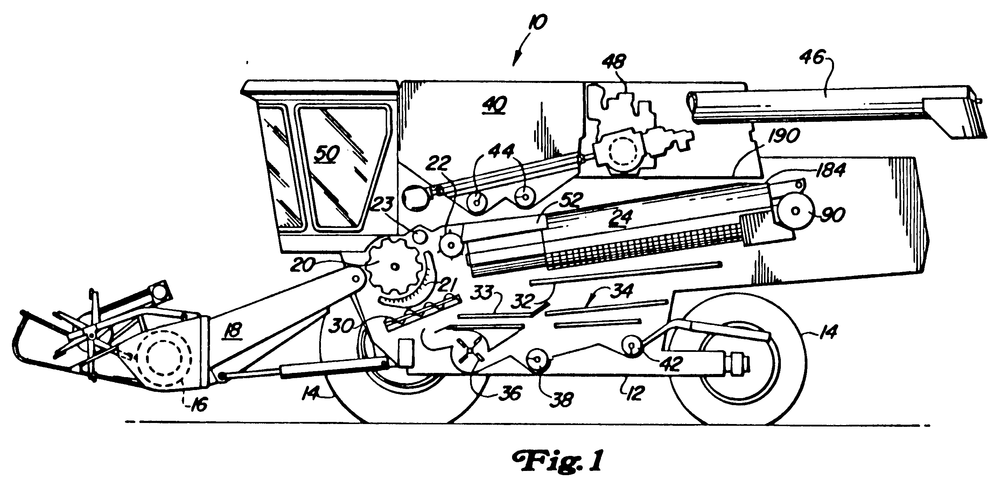

Figur 1 zeigt einen selbstfahrenden Mähdrescher 10 mit einem Tragrahmen 12, der sich über Räder 14 auf dem Boden abstützt und von diesen fortbewegt wird. Die Räder 14 werden mittels nicht gezeigter Antriebsmittel in Drehung versetzt, um den Mähdrescher 10 z. B. über das Feld zu bewegen. An den vorderen Endbereich des Mähdreschers 10 ist eine Erntegutbergungsvorrichtung 16 angeschlossen, um Erntegut von dem Feld zu ernten und es nach oben und hinten durch einen Schrägförderer 18 Dresch- und Abscheidemitteln zuzuführen. Die Dresch- und Abscheidemittel enthalten eine quer angeordnete Dreschtrommel 20 und einen dieser zugeordneten Dreschkorb 21, denen das geerntete Gut zuerst zugeführt wird. Danach wird das Dreschgut einer Abstreifrolle 23 und einer Wendetrommel 22 zugeführt, von wo aus es in einen Axialabscheider 24 gelangt.

Getreide und Spreu, die während des Dreschvorgangs abgeschieden werden, fallen auf wenigstens eine Schnecke 30, die beides einem Vorbereitungsboden 33 zuführt. Getreide und Spreu, die hingegen aus dem Axialabscheider 24 austreten, fallen auf einen Schüttelboden 32, der es zur Weitergabe auf den Vorbereitungsboden 33 führt. Der Vorbereitungsboden 33 gibt das Getreide und die Spreu einem Siebkasten 34 weiter, dem ein Gebläse 36 zugeordnet ist, um die Abscheidung der Spreu von dem Getreide zu unterstützen. Gereinigtes Getreide wird mittels einer Körnerschnecke 38 einem nicht gezeigten Elevator zugeführt, der es in einen Korntank 40 befördert. Eine Überkehrschnecke 42 gibt unausgedroschene Ährenteile durch einen weiteren nicht gezeigten Elevator zurück in den Dreschprozeß. Schließlich wird das gereinigte Getreide aus dem Korntank 40 durch ein Entladesystem mit Querschnecken 44 und einem Entladeförderer 46 entladen.

All die vorgenannten verschiedenen Systeme werden mittels eines Verbrennungsmotors 48 angetrieben, der von einer Bedienungsperson aus einer Fahrerkabine 50 heraus bedient wird. Die verschiedenen Vorrichtungen zum Dreschen, Fördern, Reinigen und Abscheiden befinden sich innerhalb des Tragrahmens 12.

### Axialabscheider

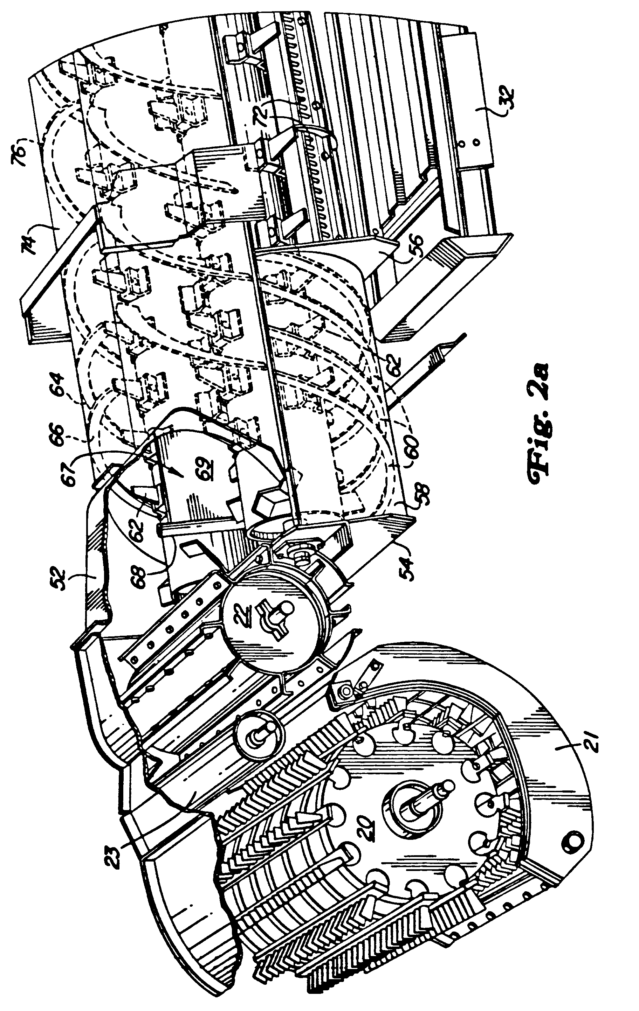

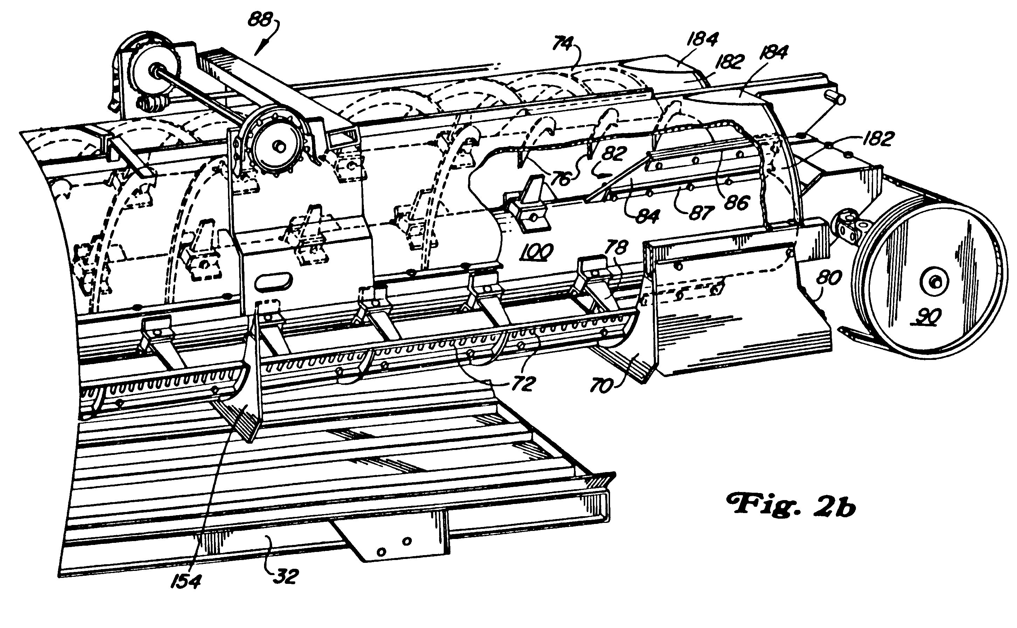

Die Ausbildung des Axialabscheiders 24 ist am besten in den Figuren 2a und 2b gezeigt. In der dargestellten Ausführungsform sind die Dreschtrommel 20 und der dieser zugeordnete Dreschkorb 21 mit Stiften besetzt, wie dies zum Dreschen von Reis vorgesehen ist; allerdings kann diese Ausführung auch gegen eine solche ausgetauscht werden, wie sie zum Dreschen anderer Erntegüter verwendet wird. Die Abstreifrolle 23 und die Wendetrommel 22 führen gemeinsam mit einem Zufuhrgehäuse 52 das gedroschene Erntegut von der Dreschtrommel 20 und dem Dreschkorb 21 dem Axialabscheider 24 zu. Die Ausbildung des Zufuhrgehäuses 52 wird am besten in der US-A-4,611,605 gelehrt, deren Inhalt hiermit einbezogen wird.

Die Zufuhrzone für beide Einheiten des Axialabscheiders 24 erstreckt sich von einer vorderen Querplatte 54 bis zu einer rückwärtigen Querplatte 56 und ist mit einem geschlossenen Boden 58 versehen. Von dem geschlossenen Boden 58 erstrecken sich nach oben spiralförmige Leitschienen 60, die in unterbrochenen Linien dargestellt sind und das Dreschgut nach hinten in eine Abscheidezone bewegen. In der Zufuhrzone ist der Rotor mit starr befestigten Zinken 62 bestückt, die kürzer sind als Zinken 78, die sich in der Abscheidezone des Axialabscheiders 24 befinden. Diese Zinken 62 sind kürzer, damit sie Freiraum für die sich nach oben erstreckenden Leitschienen 60 schaffen. Zusätzlich sind nochmals so viele Zinken 62 auf der linearen Länge des Rotors vorgesehen, als man sie in der Abscheidezone vorfindet. Ein Deckel 64 in der Zufuhrzone ist mit nach unten gerichteten Leitschienen 66 besetzt, die das Dreschgut innerhalb der Zufuhrzone nach hinten bewegen. Ein Teilerblech 67 ist innerhalb der Zufuhrzone zwischen beiden Rotoren vorgesehen und enthält eine vertikal ausgerichtete, voreilende, zylindrische Kante 68 und eine sich nach hinten erstreckende Platte 69.

Die Abscheidezone erstreckt sich von der hinteren Querplatte 56 bis zu einer vierten Querplatte 70. Der Bodenbereich jeder Einheit des Axialabscheiders 24 ist in der Abscheidezone mit einem Abscheiderost versehen, der sich aus Fingerrosten 72 und geschlossenen Platten 73 zusammensetzt. Jeder Fingerrost 72 ist wie ein Rechen oder Kamm ausgebildet, während die geschlossenen Platten 73 Metallplatten sind, die jeweils einen Bereich des Abscheiderostes abdecken. Die Ausbildung der Fingerroste 72 ist am besten in der US-A-4,875, 891 beschrieben, deren Inhalt hiermit einbezogen wird. Getreide und Spreu, die aus dem Erntegut in der Abscheidezone ausgetrennt wurden, fallen durch die Fingerroste 72 auf den Schüttelboden 32. Obere Deckplatten 74 für die Abscheidezone sind mit sich nach innen erstreckenden spiralförmigen Leitschienen oder Gleitkufen 76 zum Bewegen des Materials nach hinten ausgerüstet. Da der Bodenbereich in der Abscheidezone nicht mit spiralförmigen Leitschienen 76 besetzt ist, sind die dortigen ebenfalls starr befestigten Zinken 78 länger als die Zinken 62.

Eine Abgabezone erstreckt sich von der vierten Querplatte 70 bis zu einer rückwärtigen Querplatte 80. Der Boden jeder Einheit des Axialabscheiders 24 ist im Bereich der Abgabezone nach unten offen, so daß Stroh auf den Boden oder zu einem Strohhäcksler bzw. einem Strohstreuer abgegeben werden kann. Der Deckel über der Abgabezone ist eine Verlängerung der oberen Deckplatte 74 und ist ebenfalls mit spiralförmigen Leitschienen 76 bestückt. Der Rotor ist in der Abgabezone mit zwei sich längs erstreckenden Paddeln 82 bestückt. Jedes der Paddel 82 ist aus einem Gummistreifen 84 gebildet, an den Verschleißleisten 86 und eine Befestigungsleiste 87 angebracht sind. Die Anbringung der Verschleißleisten 86 und der Befestigungsleiste 87 an dem Gummistreifen 84 erfolgt mittels Schrauben oder Nieten 89. Die Befestigungsleisten 87 wiederum sind auf ein Rotorrohr 100 aufgeschweißt.

Der Axialabscheider 24 ist mit einer Vorrichtung 88 versehen, die dazu dient, ihn leicht aus dem Mähdrescher 10 auszubauen und die am besten in der US-A-4,969,853 offenbart ist, wobei der Inhalt dieser Schrift hiermit einbezogen wird. Jeder der Rotoren wird über je ein Getriebe angetrieben, das sich am rückwärtigen Ende des Axialabscheiders 24 befindet. Eine Antriebsscheibe 90 leitet den Antrieb in eine Querwelle, die die beiden Getriebe antreibt. Das Antriebssystem für die beiden Rotoren ist am besten in der US-A-4,739,773 beschrieben, deren Inhalt ebenfalls hiermit einbezogen wird.

### Rotor des Axialabscheiders

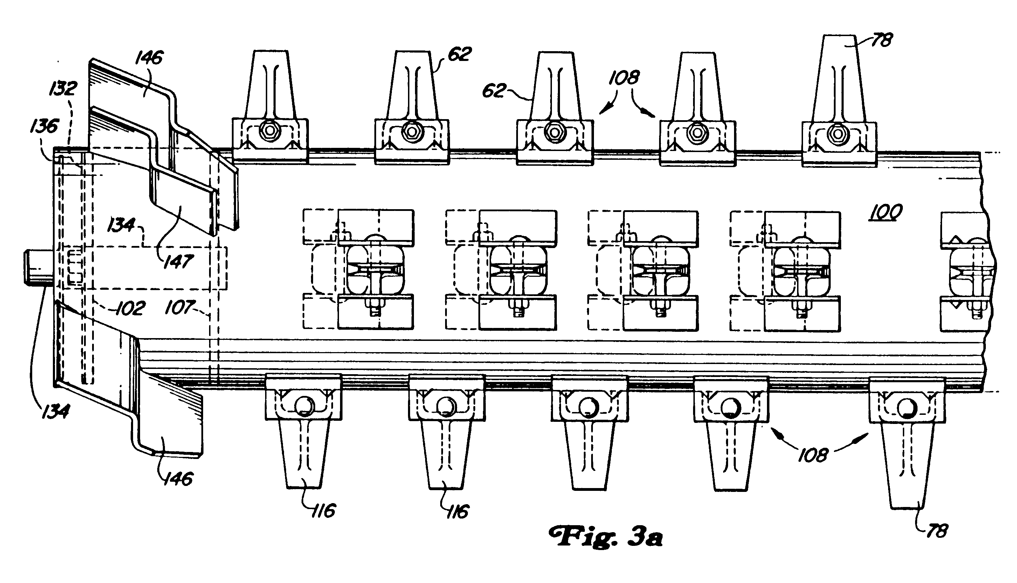

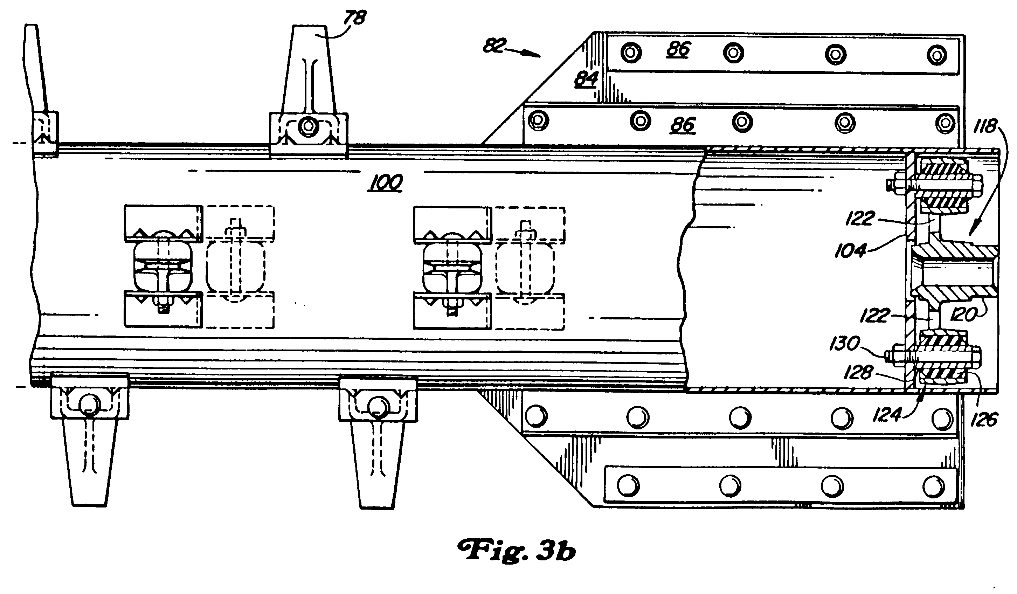

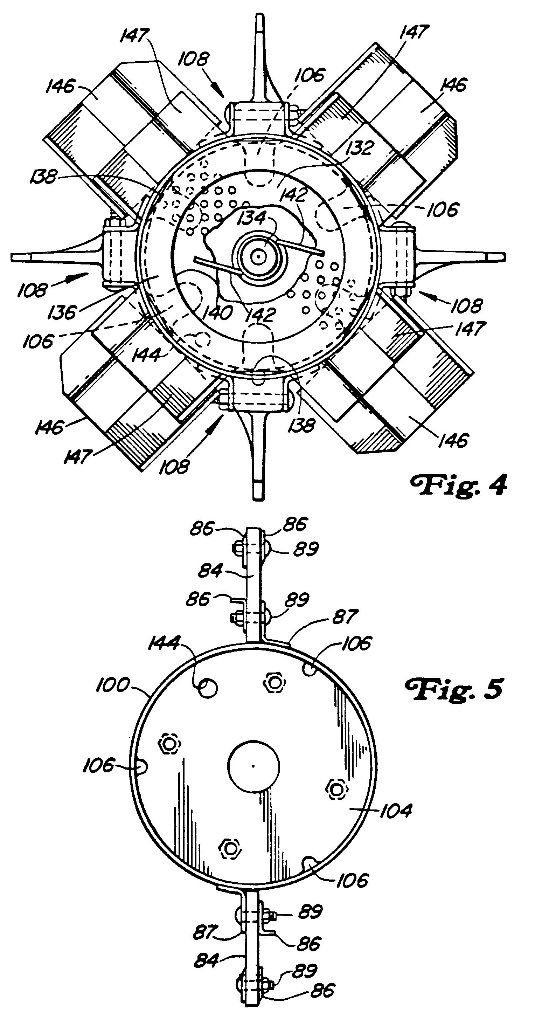

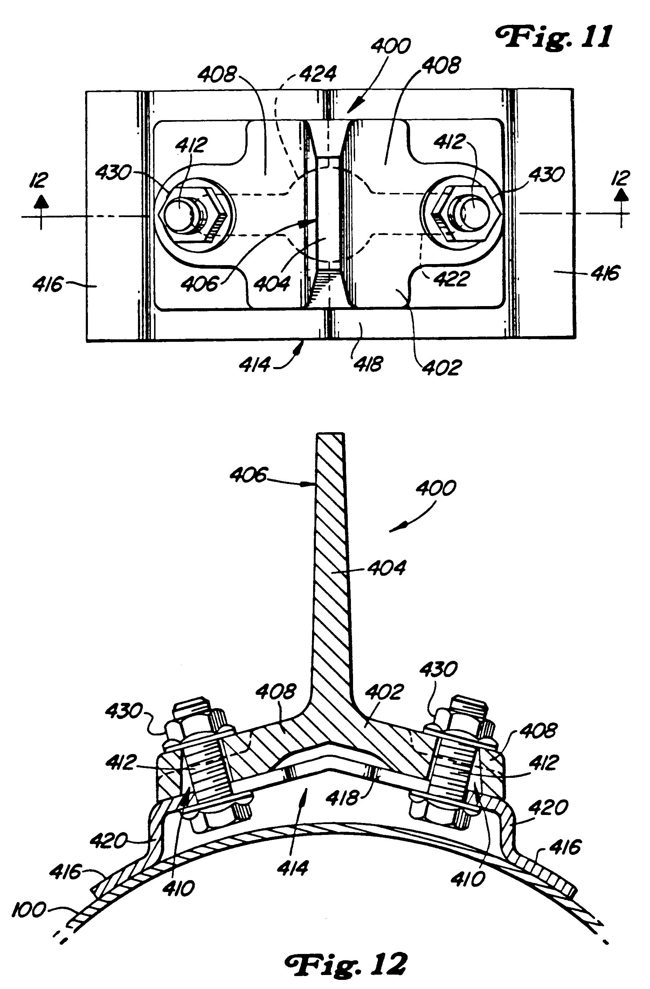

Der Rotor ist am besten in den Figuren 3a, 3b, 4 und 5 gezeigt und enthält das hohle, zylindrische Rotorrohr 100, in dessen vorderes Ende eine vordere Endplatte 102 und in dessen rückwärtiges Ende eine rückwärtige Endplatte 104 eingeschweißt ist. Beide Endplatten 102, 104 sind mit offenen Schlitzen 106 versehen, die den Austritt von Farbe aus dem Rotorrohr 100 ermöglichen, nachdem dieses in ein Farbbad getaucht worden war. Zinkenbefestigungsvorrichtungen 108 sind auf der Länge des Rotorrohrs 100 in einer spiralförmigen Anordnung auf diesem gesichert. Die bevorzugten Ausbildungen der Zinkenbefestigungsvorrichtungen 108 und der Zinken 62, 78 sind am besten in den Figuren 11 und 12 gezeigt und werden weiter unten in bezug auf diese Figuren im Detail beschrieben.

Die rückwärtige Endplatte 104 ist mit einem Verzahnungszusammenbau 118 versehen, der ein innenverzahntes Paßstück 120 enthält, in dem die Ausgangswelle des am rückwärtigen Ende des Axialabscheiders 24 gelagerten Getriebes aufgenommen werden kann. Jedes Paßstück 120 trägt radial verlaufende Stege 122, die sich von dem Paßstück 120 nach außen zu Büchsen 124 erstrecken. In jeder Büchse 124 ist ein gummiartiger, ringförmiger Einsatz 126 vorhanden, der eine Metallhülse 128 umgibt. Diese Metallhülsen 128 sind mittels Schrauben 130 an die rückwärtige Endplatte 104 angeschraubt.

Die vordere Endplatte 102 ist mit einem Sieb 132 bestückt, das an sie angeschweißt ist, um den Eintritt von Spreu und Schmutz in das Innere des Rotorrohrs 100 durch die Schlitze 106 zu vermeiden.

Eine zweite, zu der ersten vorderen Endplatte 102 identische Endplatte 107 ist innerhalb des Rotorrohrs 100 hinter der vorderen Endplatte 102 befestigt. Eine Stummelwelle 134 ist mit beiden vorderen Endplatten 102, 107 verschweißt und erstreckt sich axial von dem Rotorrohr 100 nach außen. Die Stummelwelle 134 ist in einen Lagerzusammenbau eingesetzt, der sich in der vorderen Querplatte 54 befindet. Ein sich radial nach innen erstreckender Ring 136 ist an das Rotorrohr 100 angeschweißt und weist sehnenschnittartige Öffnungen 138 auf, die mit den Schlitzen 106 übereinstimmen und ebenfalls dazu dienen, Farbe aus dem Innern des Rotorrohrs 100 auslaufen zu lassen. Der Innendurchmesser einer Innenkante 140 des Rings 136 ist geringfügig größer als der Außendurchmesser eines nicht gezeigten zylindrischen Rohrs, das sich axial von der vorderen Querplatte 54 in das Innere des Rotorrohrs 100 erstreckt. Der dadurch entstehende schmale, ringförmige Spalt zwischen dem zylindrischen Rohr der vorderen Querplatte 54 und der Innenkante 140 des Rings 136 verhindert zudem das Eindringen von Spreu, Staub und anderen Schmutzstoffen in das Rotorrohr 100. Um weiterhin die Ansammlung von Spreu, Staub und Schmutzstoffen zu verhindern, sind zwei flache Metallteile 142 auf die Stummelwelle 134 nahe und vor dem Sieb 132 aufgeschweißt. Diese Metallteile 142 wirken wie ein Gebläse und drücken Luft durch den Spalt zwischen dem Ring 136 und dem nicht gezeigten zylindrischen Rohr nach außen.

Auswuchtbohrungen 144 sind in die beiden vorderen Endplatten 102 und 107 sowie in die rückwärtige Endplatte 104 eingebracht und werden dazu benutzt, Auswuchtgewichte an die Rotorrohre 100 zu deren Auswuchtung anzuschrauben.

Starre Metallpaddel 146 sind im vorderen Endbereich des Rotorrohrs 100 im Bereich der Zufuhrzone befestigt. Die Metallpaddel 146 sind an Paddelhaltevorrichtungen 147 angeschraubt, die ihrerseits wieder auf das Rotorrohr 100 aufgeschweißt sind. Die Metallpaddel 146 werden dazu benutzt, das Erntegut in die Zufuhrzone des Axialabscheiders 24 hinein zu ziehen. Diese Metallpaddel 146 sind so schlank wie die Zinken 78, d. h. sie haben die gleiche radiale Erstreckung. Die sich spiralförmig und nach oben erstreckenden Leitschienen 60 erstrecken sich daher ebenfalls nicht bis unter die Metallpaddel 146.

### Gehäuse des Axialabscheiders

Der Rahmen für jedes Gehäuse der Einheiten des Axialabscheiders 24 wird von linken und rechten, sich axial erstreckenden Hohlprofilen 150, einem zentralen axialen Rohr 152, den Querplatten 54, 56, 70, 80, einer dritten Querplatte 154, inneren Seitenwänden 178, die eine rautenförmige Umgebung 180 bilden, und einem festen Deckel 182 gebildet. Dieser Rahmen ist zusammengeschweißt und bildet den hauptsächlichen Tragzusammenbau für den Axialabscheider 24.

Wie bereits oben erwähnt, ist die Zufuhrzone zwischen den Querplatten 54 und 56 mit einem geschlossenen Boden 58 versehen. Dieser Boden 58 ist aus Blech gebildet, das an die Querplatten 54 und 56, die Hohlprofile 150 und das axiale Rohr 152 angeschraubt ist.

Der Abscheiderost ist in der Abscheidezone untergebracht und enthält schwenkbare Gitter oder Roste, auf denen die Fingerroste 72 und die geschlossenen Platten 73 lösbar befestigt sind. Diese Gitter sind zwischen der zweiten und der dritten Querplatte 56 und 154 und zwischen der dritten und der vierten Querplatte 154 und 70 vorgesehen. Die sich quer erstreckenden Abschnitte der Gitter sind von gebogenen, teilkreisförmigen Querstücken 156 gebildet. Winkelstücke 158 erstrecken sich zwischen den Querstücken 156 und sind mit diesen verschweißt.

Jede Einheit des Axialabscheiders 24 ist mit zwei Gittern versehen - einem vorderen Gitter, das sich zwischen den Querplatten 56 und 154 und einem rückwärtigen Gitter, das sich zwischen den Querplatten 154 und 70 erstreckt.

Die Gitter schwenken um sich axial erstreckende Schwenkrohre 157, die sich durch die Querplatten 56, 154, 70 erstrecken. Ein erstes spezielles U-Eisen 160 ist an die gebogenen Querstücke 156 geschweißt und mit einem halbkreisförmigen Abschnitt 162 versehen, der ein Schwenkrohr 157 übergreift. Das U-Eisen 160 besitzt ebenfalls Halteschrauben 164, deren Schraubenkopf an dem Schwenkrohr 157 anliegt und einen guten Paßsitz für das Gitter bildet.

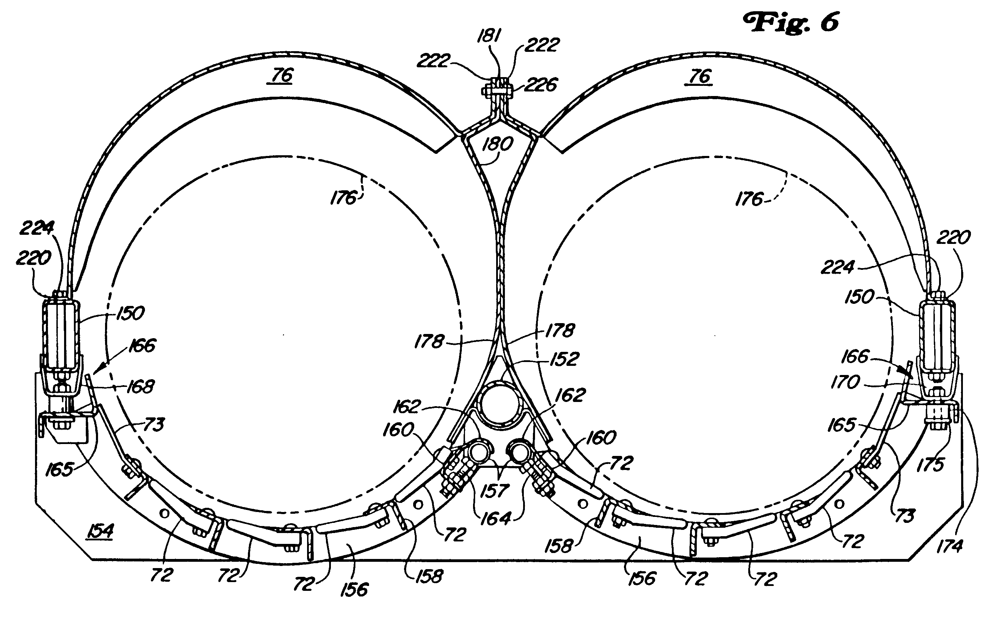

Ein zweites spezielles Stahlprofil 165 ist ebenfalls an die Querstücke 156 angeschweißt und bildet einen Teil eines Gittereinstellzusammenbaus 166, der eine Konsole 168 enthält, die wiederum mit dem Hohlprofil 150 verschweißt ist. Diese Konsolen 168 sind relativ kurz und erstrecken sich nicht über die axiale Länge des Axialabscheiders 24. Wie aus Figur 6 zu entnehmen ist, ist die in der Zeichnung rechte Einheit des Axialabscheiders 24 mit einer Befestigungsschraube 170 versehen, die sich durch die Konsole 168, das zweite spezielle Stahlprofil 165, ein Abstandsstück 174 und eine Scheibe 175 erstreckt. Da sich das Abstandsstück 174 unterhalb des Stahlprofils 165 befindet, kommt das Gitter nahe an eine Kreislinie 176, die von dem sich drehenden Rotor definiert wird. Ein enger Spalt zwischen dem Rotor und dem Gitter ist insbesondere beim Ausdreschen kleiner Körner, wie etwa Reis, wünschenswert. Bei Mais oder anderen Fruchtarten mit großen Körnern ist hingegen ein großer Abstand gewünscht, der dadurch erzielt werden kann, daß das Abstandsstück 174 oberhalb des Stahlprofils 165 angeordnet wird, wie dies bei der in Figur 6 links gelegenen Einheit des Axialabscheiders 24 gezeigt ist. Es wird darauf hingewiesen, daß die unterschiedliche Darstellung der linken und rechten Einheit des Axialabscheiders 24 jeweils für Mais oder kleine Früchte lediglich der Übersichtlichkeit wegen so gewählt worden ist.

Die inneren Seitenwände 178 der Einheiten des Axialabscheiders 24 sind aus Blech geformt und an das axiale Rohr 152 angeschweißt. Die Bleche der Seitenwände 178 erstrecken sich nach oben in die rautenförmige Umgebung 180 und gelangen dort zusammen, um einen mittigen, sich längs erstreckenden Kragen 181 entlang der Oberseite des Axialabscheiders 24 zu bilden. Der rückwärtige Bereich des Axialabscheiders 24 ist mit dem festen Deckel 182 versehen, der zwei flache Kappen 184 hat. Die flachen Kappen 184 sind so ausgebildet, daß sie sich an eine Arbeitsplattform 190 (Fig. 1) anpassen.

### Deckelzusammenbau

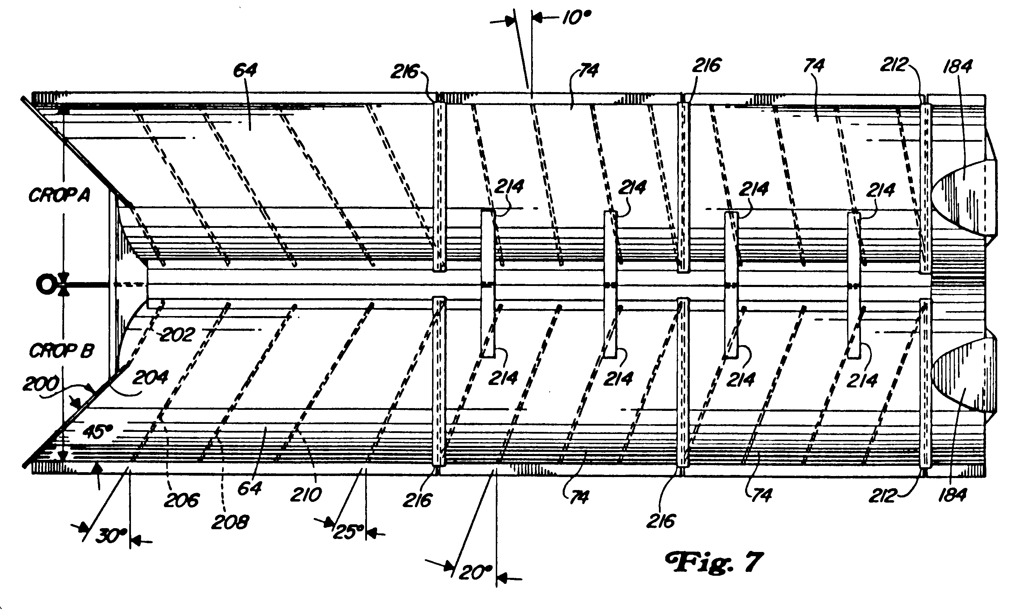

Ausgehend von dem Zufuhrgehäuse 52 bis zu dem Deckel 182 ist der Axialabscheider 24 mit sechs Deckelteilen versehen, und zwar für jede Einheit drei. Diese Deckelteile sind am besten in Figur 7 gezeigt und mit halbkreisförmigen Blechbedeckungsteilen versehen, an denen die Leitschienen 66, 76 befestigt sind. Wie bereits bei Figur 6, so sind auch hier lediglich zur besseren Anschauung die in Figur 7 obere Einheit für Mais und die untere Einheit für kleine Güter, wie Reis, angepaßt.

Die vorderen oberen Deckel 64 sind für alle Güter gleich ausgebildet. Die Innenseiten der oberen Deckel 64 sind mit spiralförmigen Leitschienen 66 bestückt, um das Erntegut nach hinten in die Einheiten des Axialabscheiders 24 zu leiten. Die Anordnung und Ausrichtung dieser Leitschienen 66 ist wichtig, um einen guten, ungestörten Materialfluß in die Einheiten des Axialabscheiders 24 zu erhalten. Eine erste Leitschiene 200 hat einen ersten Abschnitt 202, der unter einem Winkel von ca. 30 Grad, und einen zweiten Abschnitt 204, der unter einem Winkel von 45 Grad zu einer Querachse angeordnet ist. Weitere drei Leitschienen 206, 208 und 210 sind ebenfalls unter einem Winkel von 30 Grad zu der Querachse angeordnet.

Ein Deckflansch 212 ist vorne an den festen Deckel 182 angeschweißt, um eine Abdeckung für die angrenzende Kante der benachbarten oberen Deckplatte 74 direkt vor dem festen Deckel 182 zu schaffen.

Die nächsten beiden auf die Deckel 64 folgenden, oberen Deckplatten 74 sind zwar für beide Einheiten des Axialabscheiders 24 gleich, aber abhängig von den Erntegütern ausgebildet. Die Deckplatten 74 für die in Figur 7 unten gezeichnete und für die eine Fruchtart geeignete Einheit des Axialabscheiders 24 tragen Leitschienen 76, die unter einem Winkel von ca. 20 Grad zu der Querachse ausgerichtet sind. Diese Neigung von 20 Grad ist am besten für das Dreschen von kleinen Früchten, wie etwa Reis, geeignet. Die Leitschienen 76 der Deckplatten 74 der in der Zeichnung oben gelegenen Einheit sind unter einem Winkel von 10 Grad zu der Querachse angeordnet, was am besten für Erntegüter wie Mais geeignet ist. Unter der Querachse wird stets eine Achse verstanden, die sich unter 90 Grad zu der Längsachse und somit der Förderrichtung der Rotoren erstreckt.

Alle vier Deckplatten 74 sind mit zwei Handgriffen 214 versehen, die an deren Oberseiten angeschweißt sind. Zusätzlich ist die vordere Kante jeder Deckplatte 74 mit einem Deckflansch 216 versehen, der dem Deckflansch 212 zum Bedecken der Kante zwischen nebeneinander gelegenen Deckplatten 74 und dem Deckel 182 entspricht.

Die vorderen Deckel 64 und die Deckplatten 74 sind mit sich nach außen erstreckenden Befestigungsflanschen 220 und mit sich nach oben erstreckenden Befestigungsflanschen 222 versehen. Die sich nach außen erstreckenden Befestigungsflansche 220 sind mittels Schrauben 224, die sich durch die Hohlprofile 150 hindurch erstrecken, an die Hohlprofile 150 angeschraubt. Die sich nach oben erstreckenden Befestigungsflansche 222 sind mittels Schrauben 226 mit dem Kragen 181 und sich selbst verbunden.

Die Beziehung bzw. Zuordnung zwischen den Leitschienen 60, 66, 76, 200 und 206 - 210 und den Zinken 62 in der Zufuhr-, Abscheide- und Abgabezone ist sehr wichtig für einen einwandfreien Fluß des Ernteguts durch den Axialabscheider 24. Die steileren und unter 30 bzw. 45 Grad geneigten Leitschienen 200, 206, 208, 210 bzw. deren Abschnitte 202, 204 an dem Deckel 64 und die Leitschienen 60 an dem geschlossenen Boden 58 der Zufuhrzone beschleunigen das Erntegut nach hinten, um es schnell in Bewegung zu bringen. Die flacher angeordneten Leitschienen 76 unterhalb der oberen Deckplatten 74 (25 Grad und 20 Grad bei kleinen Früchten; 10 Grad bei Mais) hindern das Erntegut an einer weiteren Beschleunigung ihrer nach hinten gerichteten Geschwindigkeit. Dies stellt sicher, daß das Dreschgut ausreichend lang in dem Axialabscheider 24 für eine einwandfreie Abscheidung verbleibt.

Eine Bedienungsperson, die den Axialabscheider 24 von der Ausrüstung für kleine Früchte auf Mais oder umgekehrt umrüsten will, zieht den Axialabscheider 24 gemäß der US-A-4,969,853 aus dem Mähdrescher 10 nach hinten heraus und löst die Deckplatten 74 ab. Danach baut er die erforderlichen Deckplatten 74 mit den entsprechend ausgerichteten Leitschienen auf und schiebt den Axialabscheider 24 wieder in den Mähdrescher 10 hinein.

### Abscheiderost

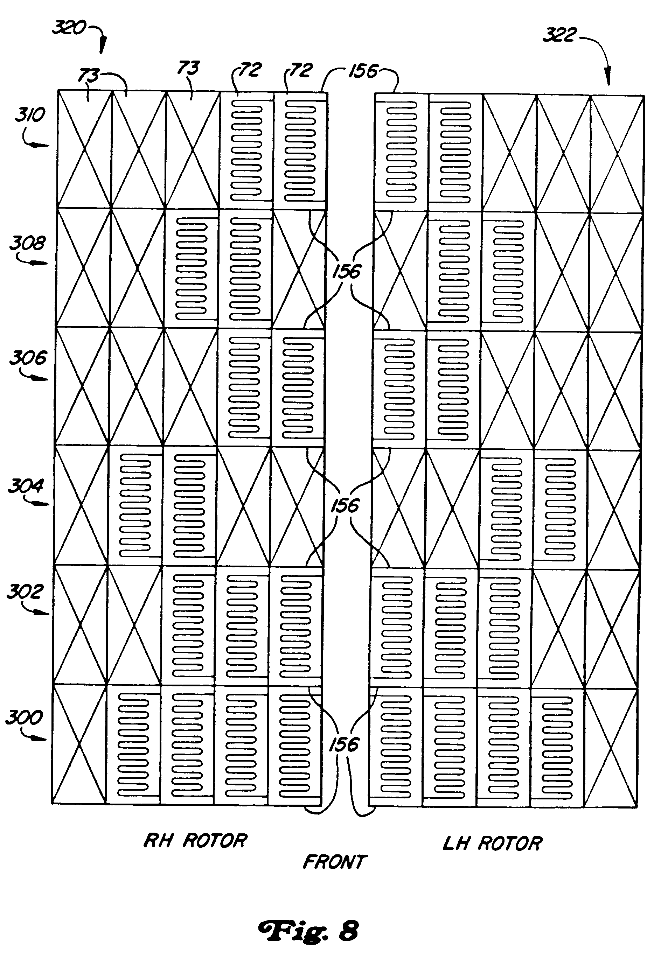

Wie bereits zuvor beschrieben worden ist, setzt sich jeder Abscheiderost aus Fingerrosten 72 und geschlossenen Platten 73 zusammen, die auf den schwenkbaren Gittern angeordnet sind. Beim Dreschen kleiner Früchte ist die Anordnung dieser Platten 73 wichtig, um eine einwandfreie Abscheidung ohne eine Überfrachtung des Siebkastens 34 zu gewährleisten. Die in Figur 8 gezeigte Anordnung stellt die beste Anordnung für kleine Früchte dar und sorgt für eine einwandfreie Verteilung der Spreu auf dem Siebkasten 34.

Jede Einheit des Axialabscheiders 24 ist mit einem Abscheiderost mit sechs Querreihen 300, 302, 304, 306, 308 und 310 und fünf Öffnungen darin ausgestattet. In diese Öffnungen sind entweder ein Fingerrost 72 oder eine geschlossene Platte 73 eingesetzt. In der vordersten Querreihe 300 ist lediglich die am weitesten außen gelegene Öffnung mit einer geschlossenen Platte 73 versehen. Die vier verbleibenden Öffnungen enthalten Fingerroste 72, um dem ausgedroschenen Gut einen Austritt zu dem Schüttelboden 32 zu ermöglichen. Die nächste Querreihe 302 hat drei Fingerroste 72 und zwei geschlossene Platten 73. Die verbleibenden Querreihen 304 - 310 haben jeweils zwei Fingerroste 72 und drei geschlossene Platten 73.

Gemäß Figur 8 ist der durchlässige und mit Fingerrosten 72 bestückte Bereichsanteil des Abscheiderostes vorne, also stromaufwärts am größten (vier Fingerroste 72), während er nach hinten bis zur halben Strecke gleichmäßig abnimmt und dort nur noch zwei Fingerroste 72 hat. Ab der halben Länge bleibt der durchlässige Bereichsanteil mit jeweils zwei Fingerrosten 72 pro Querreihe 306 - 310 konstant. Nach einer anderen Betrachtungsweise belegen die durchlässigen Fingerroste 72 70 % des ersten Drittels (Querreihen 300, 302) des Abscheiderostes, während die geschlossenen Platten 30 % belegen. In den folgenden beiden Dritteln (Querreihen 304 bis 310) belegen die Fingerroste 72 40 % und die geschlossenen Platten 73 60 % des Abscheiderostes.

Diese Anordnung ist am wirksamsten, weil das gedroschene Erntegut, das stromaufwärts in dem Axialabscheider 24 einzutreten beginnt, einen hohen Anteil an heraus zu lösenden Früchten enthält. Je weiter das Erntegut durch den Axialabscheider bewegt wird, desto mehr verringert sich dieser Früchteanteil.

Die in der Art eines Diagramms in Figur 8 wiedergegebene Darstellung ist für das Dreschen von kleinen Früchten bestimmt. Zum Dreschen bzw. Abscheiden von Mais werden alle geschlossenen Platten 73 - außer denen in den äußersten Längsreihen 320, 322 - durch Fingerroste 72 ersetzt. Es wird auch darauf hingewiesen, daß die Darstellungen der Figuren 8 und 2a, 2b nicht übereinstimmen, da in Figur 8 die äußeren Öffnungen geschlossen, in Figur 2a, 2b hingegen mit Fingerrosten 72 versehen sind. Die Darstellung der Fingerroste 72 in den Figuren 2a, 2b ist lediglich der besseren Darstellung wegen so gewählt worden.

### Abgabevorrichtung

Es ist wichtig, daß das Stroh gleichmäßig verteilt wird, wenn es aus dem Axialabscheider 24 herauskommt, da dies einem nachfolgenden Strohhäcksler oder Strohstreuer einen besseren Wirkungsgrad und eine gleichmäßigere Verteilung auf dem Boden ermöglicht.

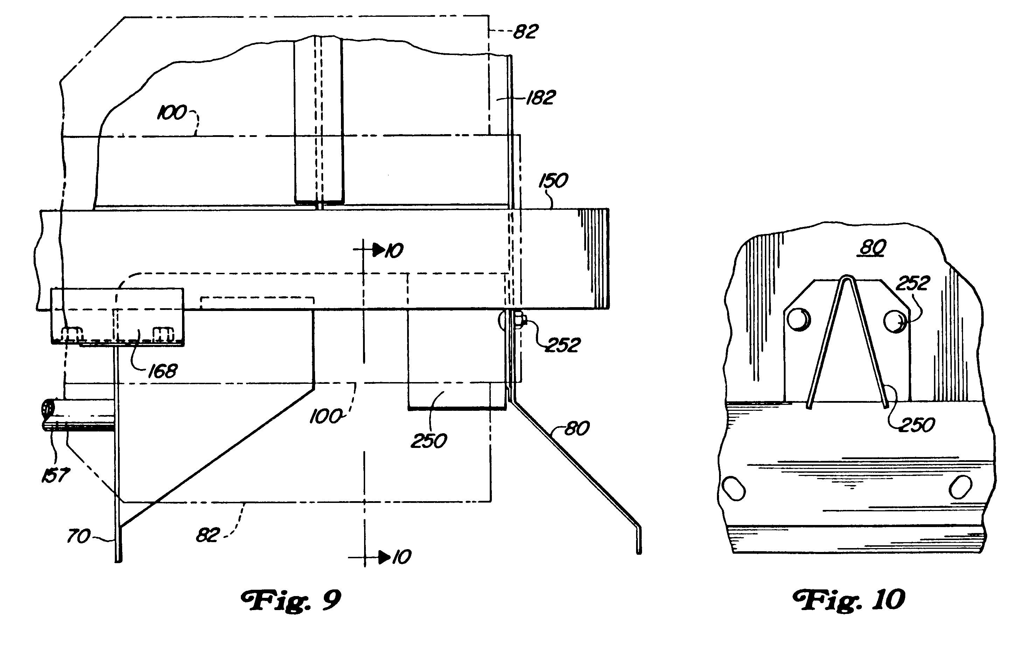

Die Ausbildung der Abgabevorrichtung des Axialabscheiders 24 ist am besten in den Figuren 9 und 10 wiedergegeben. Die Abgabezone erstreckt sich von der vierten Querplatte 70 bis zu der rückwärtigen Querplatte 80 und hat einen offenen Boden, durch den das Erntegut mittels der Paddel 82 abgegeben werden kann. Die ersten und stromaufwärts gelegenen 75 % der Länge des Abgabebereichs sind offen und durch nichts begrenzt. Das Stroh, das durch diesen Bereich fällt, konzentriert sich unterhalb der axialen Mittellinie des Axialabscheiders 24. Die rückwärtigen 25 % des Abgabebereichs sind mit einem Deflektor 250 versehen, um das Stroh zu den außenliegenden Rändern des Axialabscheiders 24 abzulenken, damit eine gleichmäßigere Verteilung des Strohs in dem Mähdrescher 10 erreicht wird. Der Deflektor 250 ist mit Schrauben 252 an die rückwärtige Querplatte 80 angeschraubt und erstreckt sich von dieser in Längsrichtung gesehen nach vorne und zwar über eine Entfernung von ca. einem Viertel der Länge des Abgabebereichs.

### Zinkenbefestigung

Die Befestigung der Zinken 62, 78 des Axialabscheiders 24 auf dem Rotorrohr 100 ist am besten in den Figuren 11 und 12 für beide Ausführungsformen dargestellt. Die dargestellte Zinkenbefestigungsvorrichtung 108 wird sowohl für die Zinken 62 als auch für die Zinken 78 bevorzugt.

Zinken 400 im allgemeinen und die Zinken 62, 78 in der Zufuhr- bzw. Abscheidezone im besonderen sind mit einem Befestigungsfuß 402 und einem Mitnehmer 404 versehen, wobei sich letzterer von dem Befestigungsfuß 402 aus nach außen erstreckt. Der Mitnehmer 404 erstreckt sich von dem Rotorrohr 100 radial nach außen und hat eine längs ausgerichtete, flache und ebene Eingriffsfläche 406. Der Befestigungsfuß 402 hat zwei Schenkel 408, von denen jeder mit einer Befestigungsöffnung 410 versehen ist, in die Befestigungsschrauben 412 eingesetzt sind.

Jeder Zinken 400 ist an einem Halter 414 befestigt, der an Verlängerungen 416 auf das Rotorrohr 100 geschweißt ist. Ein Mittenteil 418 des Halters 414 erstreckt sich über Stege 420 von der äußeren Oberfläche des Rotorrohrs 100 aus nach oben, d. h. radial nach außen. Ein Schlitz 422 zum Festlegen der Befestigungsschrauben 412 ist in den Mittenteil 418 eingearbeitet und enthält in seiner Mitte eine vergrößerte Öffnung 424, durch die der Kopf der Befestigungsschrauben 412 eingefügt werden kann. Nachdem der Kopf der ersten Befestigungsschraube 412 durch die vergrößerte Öffnung 424 eingeführt worden ist, wird die Befestigungsschraube 412 zum einen Ende des Schlitzes 422 bewegt. Anschließend wird der Kopf der zweiten Befestigungsschraube 412 in gleicher Weise durch die Öffnung 424 eingefügt und zum anderen Ende des Schlitzes 422 bewegt. Beide Befestigungsschrauben 412 werden dann nach der Lage der Befestigungsöffnungen 410 des Zinkens 400 ausgerichtet. Anschließend wird mittels Muttern 430 der Zinken 400 auf dem Halter 414 gesichert. Die Befestigungsschrauben 412 haben eine ausreichende Länge, und der Schlitz 422 ist so ausgebildet, daß die Befestigungsschrauben 412 in dem Halter 414 gehalten werden und sich von diesem radial nach außen erstrecken, nachdem sie von der Öffnung 424 entlang des Schlitzes 422 nach außen bewegt worden sind.

Zum ersten Zusammenbau des Rotors wird der Zinken 400 auf den Halter 414 geschraubt und anschließend der Halter 414 auf das Rotorrohr 100 aufgeschweißt. Infolge der zunächst vorgenommenen Montage des Zinkens 400 auf den Halter 414 werden Belastungen vermieden, die ansonsten beim nachträglichen Aufschrauben des Zinkens 400 auf den Halter 414 entstehen könnten.

### Arbeitsweise

Die Drehgeschwindigkeit der quer angeordneten Dreschtrommel 20 und der Spalt zwischen der Dreschtrommel 20 und dem Dreschkorb 21 werden auf herkömmliche Weise eingestellt. Diese Einstellungen führen die Wirksamkeit der Dreschtrommel 20 mit dem Dreschkorb 21 zu einem Maximum bei unterschiedlichen Früchten. Da der Axialabscheider 24 hinsichtlich der zusätzlichen Abscheidung von Getreide aus dem gedroschenen Erntegut wirksamer ist als herkömmliche Strohschüttler, kann ein schonenderer Ausdrusch durch die Dreschtrommel 20 gewählt werden. Gleichzeitig wird die Sieböffnung des Körner- und des Kurzstrohsiebs in dem Siebkasten 34 für die unterschiedlichen Fruchtarten optimal eingestellt.

Gemäß Figur 6 ist der Rotor jeder Einheit des Axialabscheiders 24 in einem nicht-konzentrischen Gehäuse untergebracht. Man kann dort im Vertikalschnitt erkennen, daß das Gehäuse aus einem halbkreisförmigen Deckel und einem ebenfalls halbkreisförmigen Boden besteht, die miteinander über im wesentlichen vertikale Seitenteile verbunden sind. Der Rotor ist dem Boden zu angeordnet und mit Zinken bestückt, die nur in einen relativ geringen Teil in Erntegut in dem Axialabscheider 24 eingreifen.

Die Zinken 400 durchdringen das Erntegut und ziehen es mit herum, anstatt es zu schieben, wie dies für herkömmliche Axialdrescher typisch ist. Dieses Ziehen verhindert, daß das Erntegut "rollt" und Stränge oder Brocken bildet, die den Rotor in dem Gehäuse festklemmen können. Aufgrund der Form des Gehäues des Axialabscheiders 24 wird das Erntegut zunächst von den Zinken 400 erfaßt, in Drehung versetzt und losgelassen, sobald es nach oben gegen die Leitschienen 66, 76, 200, 206 - 210 fliegt, die das Erntegut nach hinten bewegen.

Das Loslassen des Ernteguts erfolgt aufgrund der Zentrifugalkraft, die das Erntegut von den Zinken 400 abhebt und in den Freiraum oberhalb der Rotoren hebt, der von den beiden nicht-konzentrischen Gehäusen und der exzentrischen Lagerung der Rotoren gebildet wird. Diese Zentrifugalkraft wird gebildet, wenn sich der Rotor in einem bestimmten Geschwindigkeitsbereich bewegt. Darüber hinaus ist es wichtig, keinen erhöhten Strohbruch infolge erhöhter Geschwindigkeit zu erzeugen.

Bei Rotoren mit einem Durchmesser von 500 mm, der an den Spitzen der Zinken 400 in der Zufuhr- und der Abscheidezone gemessen wird, ist eine minimale Umdrehungszahl von 450 Upm und eine maximale Umdrehungszahl von 800 Upm erforderlich. Daraus ergibt sich eine minimale Spitzengeschwindigkeit von 11,8 m/sec und eine maximale Spitzengeschwindigkeit von 20,9 m/sec. Bei einer Geschwindigkeit von weniger als 11,8 m/sec löst sich das Erntegut nicht einwandfrei von den Zinken 400. Bei einer Geschwindigkeit von mehr als 20,9 m/sec erhöht sich der Strohbruch.

Da die minimale Spitzengeschwindigkeit eine minimale Ablösegeschwindigkeit ist, und da die Zinken 62 in der Zufuhrzone kürzer sind als die Zinken 78 in der Abscheidezone, bezieht sich die minimale Geschwindigkeit auf die Zinken 62. Die maximale Geschwindigkeit verhindert einen unverhältnismäßigen Körnerbruch und ist die maximale Geschwindigkeit, die für die Abscheidezinken zulässig ist, da diese länger sind als die Zinken 62.

## Patentansprüche

1. Axialabscheider (24) mit einem Gehäuse und einem darin drehbar gelagerten und auf seinem Umfang mit Zinken (62, 78, 400) oder dergleichen bestückten Rotor, wobei an der Innenseite des Gehäuses Leitschienen (66, 76, 200, 206, 208, 210) vorgesehen sind, die unterschiedlich geneigt zu einer quer zur Drehachse des Rotors verlaufenden Achse verlaufen, dadurch gekennzeichnet, daß das Gehäuse wenigstens teilweise mit lösbaren Deckplatten (74) versehen ist, an denen die Breite der Mantelfläche der Deckplatten nicht überschreitende Leitschienen (66, 76, 200, 206, 208, 210) angebracht sind und die zum Austausch gegen Deckplatten (74) mit gleichen Anschlußmaßen aber Leitschienen (66, 76, 200, 206, 208, 210) anderer Neigung bestimmt sind.

2. Axialabscheider nach Anspruch 1, dadurch gekennzeichnet, daß die Neigung der Leitschienen (66, 76, 200, 206, 208, 210) zu der Achse in einer stromaufwärts gelegenen Zufuhrzone steiler ist, als in einer stromabwärts folgenden Abscheidezone.

3. Axialabscheider nach Anspruch 1 oder 2, dadurch gekennzeichnet, daß in einer der Abscheidezone vorgelagerten Zufuhrzone die Leitschienen (66, 200, 206, 208, 210) unter einem Winkel zwischen ca. 25 und ca. 45 Grad zu der Achse angeordnet sind.

4. Axialabscheider nach einem oder mehreren der vorherigen Ansprüche, dadurch gekennzeichnet, daß ihm eine nach dem dem Tangentialflußprinzip arbeitende Dreschtrommel (20) quer vorgelagert ist und die auf die Dreschtrommel (20) folgenden Leitschienen (66, 200) unter einem Winkel von ca. 45 Grad zu der Achse verlaufen.

5. Axialabscheider nach einem oder mehreren der vorherigen Ansprüche, dadurch gekennzeichnet, daß in der Abscheidezone die Leitschienen (76) unter einem Winkel von ca. 10 Grad zu der Achse verlaufen.

6. Axialabscheider nach einem oder mehreren der Ansprüche 1 bis 5, dadurch gekennzeichnet, daß in der Abscheidezone die Leitschienen (76) unter einem Winkel von ca. 20 Grad zu der Achse verlaufen.

7. Axialabscheider nach einem oder mehreren der vorherigen Ansprüche, dadurch gekennzeichnet, daß zwei parallel zueinander verlaufende Rotoren in voneinander getrennten Gehäusen vorgesehen sind, wobei jedes Gehäuse mit wenigstens zwei und vorzugsweise drei lösbaren Deckplatten (64, 74) versehen ist.

8. Axialabscheider nach Anspruch 7, dadurch gekennzeichnet, daß auf der Länge des Gehäuses aufeinanderfolgend drei Deckplatten (64, 74) vorgesehen sind, von denen sich die erste über die Zufuhrzone und die zweite und die dritte über die Abscheidezone erstrecken.

9. Axialabscheider nach Anspruch 8, dadurch gekennzeichnet, daß die Leitschienen (66, 200, 206, 208, 210) mit einer Neigung von ca. 25 bis ca. 45 Grad an der ersten Deckplatte (64) und die Leitschienen (76) unter einem Winkel von ca. 10 bzw. ca. 20 Grad an der zweiten und der dritten Deckplatte (74) angebracht sind.

10. Axialabscheider nach einem oder mehreren der vorherigen Ansprüche, dadurch gekennzeichnet, daß die Endbereiche aufeinanderfolgender Deckplatten (64, 74) von Deckflanschen (212, 216) übergriffen werden.

11. Axialabscheider nach einem oder mehreren der vorherigen Ansprüche, dadurch gekennzeichnet, daß die zweite und die dritte Deckplatte (74) untereinander austauschbar ausgebildet sind.

12. Axialabscheider nach einem oder mehreren der vorherigen Ansprüche, dadurch gekennzeichnet, daß die Leitschienen (66, 76, 200, 206, 208, 210) spiralförmig verlaufen.

13. Axialabscheider nach einem oder mehreren der vorherigen Ansprüche, dadurch gekennzeichnet, daß er als eine auf Schienen oder dergleichen beweglich gelagerte Einheit aus einer Erntemaschine entnehmbar und in diese einsetzbar ist.

14. Axialabscheider nach einem oder mehreren der vorherigen Ansprüche, dadurch gekennzeichnet, daß auf der Außenseite der zweiten und dritten Deckplatte (74) Handgriffe (214) angebracht sind.

15. Deckplatte (64, 74) für einen Gehäuseabschnitt eines Axialabscheiders mit spiralförmigen die Breite der Mantelfläche der Deckplatten (64, 74) nicht überschreitenden und sich über den gesamten Leitbereich des betreffenden Gehäuseabschnitts erstreckenden Leitschienen (66, 76, 200, 206, 208, 210) an einer einem Rotor zugelegenen Fläche und mit sich in der Axialrichtung und nach außen erstreckenden Befestigungsflanschen (220, 222) für eine lösbare Befestigung der Deckplatte (64, 74).

16. Deckplatte nach Anspruch 15, dadurch gekennzeichnet, daß sich wenigstens ein Befestigungsflansch (220, 222) in der Axialrichtung des Rotors erstreckt.

17. Deckplatte nach Anspruch 15 oder 16, dadurch gekennzeichnet, daß wenigstens ein sich axial erstreckender Befestigungsflansch mittels Schrauben (224, 226) an dem Gehäuse festgelegt wird.

18. Deckplatte nach einem oder mehreren der vorherigen Ansprüche, gekennzeichnet durch Deckflansche (212, 216) zur Verbindung benachbarter Deckplatten (64, 74) an deren stirnseitigen Enden.

19. Deckplatte nach einem oder mehreren der vorherigen Ansprüche, gekennzeichnet durch fünf spiralförmige, an seiner dem Rotor zugelegenen Fläche angebrachte Leitschienen (66, 76, 200, 206, 208, 210), von denen eine erste unter einem Winkel von ca. 45 Grad, eine zweite, dritte und vierte unter einem Winkel von ca. 30 Grad und eine fünfte unter einem Winkel von ca. 25 Grad zu einer senkrecht auf der Rotordrehachse stehenden Achse verläuft.

20. Deckplatte nach einem oder mehreren der Ansprüche 15 bis 18, gekennzeichnet durch vier spiralförmige, an seiner dem Rotor zugelegenen Fläche angebrachte Leitschienen (76), die unter einem Winkel von ca. 20 Grad zu einer senkrecht auf der Rotordrehachse stehenden Achse verlaufen.

21. Deckplatte nach einem oder mehreren der Ansprüche 15 bis 18, gekennzeichnet durch vier spiralförmige, an seiner dem Rotor zugelegenen Fläche angebrachte Leitschienen (76), die unter einem Winkel von ca. 10 Grad zu einer senkrecht auf der Rotordrehachse stehenden Achse verlaufen.

## Claims

1. Axial separator (24) with a housing and a rotor rotatably mounted therein and fitted on its circumference with separator teeth (62, 78, 400) or similar, wherein vanes (66, 76, 200, 206, 208, 210) are provided on the inside of the housing and run at different angles of inclination to an axis extending transversely to the rotational axis of the rotor, characterised in that the housing is at least partially fitted with detachable cover plates (74), to which vanes (66, 76, 200, 206, 208, 210) not exceeding the width of the outer surface of the cover plates are attached and are designed for replacement by cover plates (74) with the same connection dimensions but with vanes (66, 76, 200, 206, 208, 210) with a different angle of inclination.

2. Axial separator according to Claim 1, characterised in that the angle of inclination of the vanes (66, 76, 200, 206, 208, 210) to the axis in a supply zone located upstream is steeper than in a subsequent separation zone downstream.

3. Axial separator according to Claim 1 or 2, characterised in that in a supply zone arranged in front of the separation zone, the vanes (66, 200, 206, 208, 210) are arranged at an angle of between approximately 25° and approximately 45° to the axis.

4. Axial separator according to one or some of the preceding claims, characterised in that a threshing cylinder (20) operating according to the tangential flow principle is mounted transversely in front of said separator and the vanes (66, 200) following the threshing cylinder (20) extend at an angle of approximately 45° to the axis.

5. Axial separator according to one or some of the preceding claims, characterised in that in the separation zone the vanes (76) extend at an angle of approximately 10° to the axis.

6. Axial separator according to one or some of Claims 1 to 5, characterised in that in the separation zone the vanes (76) extend at an angle of approximately 20° to the axis.

7. Axial separator according to one or some of the preceding claims, characterised in that two rotors running parallel to one another are provided in separate housings, each housing being fitted with at least two, and preferably three, detachable cover plates (64, 74).

8. Axial separator according to Claim 7, characterised in that three cover plates (64, 74) are provided one behind the other on the length of the housing, the first of said cover plates extending over the supply zone and the second and third over the separation zone.

9. Axial separator according to Claim 8, characterised in that vanes (66, 200, 206, 208, 210) are attached to the first cover plate (64) at an angle of inclination of approximately 25° to approximately 45° and vanes (76) are attached to the second and third cover plates (74) at an angle of approximately 10° or approximately 20° respectively.

10. Axial separator according to one or some of the preceding claims, characterised in that the end regions of consecutive cover plates (64, 74) are covered by covering flanges (212, 216).

11. Axial separator according to one or some of the preceding claims, characterised in that the second and third cover plates (74) are constructed to be interchangeable.

12. Axial separator according to one or some of the preceding claims, characterised in that the vanes (66, 76, 200, 206, 208, 210) run in a spiral.

13. Axial separator according to one or some of the preceding claims, characterised in that it may be removed from a harvesting machine and inserted into same as a unit movably mounted on rails or similar.

14. Axial separator according to one or some of the preceding claims, characterised in that handles (214) are attached on the outside of the second and third cover plates (74).

15. Cover plate (64, 74) for a housing section of an axial separator with spiral vanes (66, 76, 200, 206, 208, 210) not exceeding the width of the outer surface of the cover plates (64, 74) and extending over the entire guide area of the respective housing section on an area close to a rotor and with mounting flanges (220, 222) extending outwards in axial direction for a detachable mounting of the cover plate (64, 74).

16. Cover plate according to Claim 15, characterised in that at least one mounting flange (220, 222) extends in the axial direction of the rotor.

17. Cover plate according to Claim 15 or 16, characterised in that at least one axially extending mounting flange is attached to the housing by means of screws (224, 226).

18. Cover plate according to one or some of the preceding claims, characterised by covering flanges (212, 216) for the connection of adjacent cover plates (64, 74) at their face ends.

19. Cover plate according to one or some of the preceding claims, characterised by five spiral vanes (66, 76, 200, 206, 208, 210) attached to its area close to the rotor, a first of said vanes extending at an angle of approximately 45°, a second, third and fourth at an angle of approximately 30° and a fifth at an angle of approximately 25° to an axis standing perpendicular on the rotational axis of the rotor.

20. Cover plate according to one or some of the preceding claims 15 through 18, characterised by four spiral vanes (76) attached to its area close to the rotor which extend at an angle of approximately 20° to an axis standing perpendicular on the rotational axis of the rotor.

21. Cover plate according to one or some of the preceding claims 15 through 18, characterised by four spiral vanes (76) attached to its area close to the rotor which extend at an angle of approximately 10° to an axis standing perpendicular on the rotational axis of the rotor.

## Revendications

1. Séparateur axial (24) comportant un carter et un rotor, qui est monté rotatif dans ce carter et est équipé, sur sa périphérie, de dents (62,78,400) ou analogues, et dans lequel des rails de guidage (66,76,200, 206,208,210) qui sont différemment inclinés par rapport à l'axe qui s'étend transversalement par rapport à l'axe de rotation du rotor, sont prévus sur la face intérieure du carter, caractérisé en ce que le carter est équipé au moins en partie de plaques amovibles de recouvrement (74), sur laquelle sont montés les rails de guidage (66,76,200,206, 208,210), qui ne s'étendent pas au-delà de l'étendue en largeur de la surface enveloppe des plaques de recouvrement et qui sont destinées à être remplacées par des plaques de recouvrement (74) possédant les mêmes cotes de raccordement, mais avec des rails de guidage (66,76,200,206,208, 210) ayant une autre inclinaison.

2. Séparateur axial selon la revendication 1, caractérisé en ce que l'inclinaison des rails de guidage (66,76,200,206,208,210) par rapport à l'axe est plus accusée dans une zone d'amenée située en amont que dans une zone de séparation située en aval.

3. Séparateur axial selon la revendication 1 ou 2, caractérisé en ce que dans une zone d'amenée située en amont de la zone de séparation, les rails de guidage (66,200,206,208,210) sont disposés en faisant un angle compris entre environ 25 et environ 45 degrés par rapport à l'axe.

4. Séparateur axial selon une ou plusieurs des revendications précédentes, caractérisé en ce qu'en amont du séparateur axial est disposé transversalement un batteur (20) qui travaille selon le principe du flux tangentiel, et que les rails de guidage (66,200), qui sont présents en aval du batteur (20), s'étendent sous un angle d'environ 45 degrés par rapport à l'axe.

5. Séparateur axial selon une ou plusieurs des revendications précédentes, caractérisé en ce que dans la zone de séparation, les rails de guidage (76) font un angle d'environ 10 degrés par rapport à l'axe.

6. Séparateur axial selon une ou plusieurs des revendications 1 à 5, caractérisé en ce que dans la zone de séparation, les rails de guidage (76) font un angle d'environ 20 degrés par rapport à l'axe.

7. Séparateur axial selon une ou plusieurs des revendications précédentes, caractérisé en ce qu'il est prévu deux rotors parallèles disposés dans des carters séparés, chaque carter étant équipé d'au moins deux et de préférence de trois plaques de recouvrement amovibles (64, 74).

8. Séparateur axial selon la revendication 7, caractérisé en ce que sur l'étendue en longueur du carter sont disposées successivement trois plaques de recouvrement (64,74), dont la première s'étend au-dessus la zone d'amenée et les seconde et troisième s'étendent au-dessus de la zone de séparation.

9. Séparateur axial selon la revendication 8, caractérisé en ce que les rails de guidage (66,200,206,208, 210) sont disposés avec une inclinaison d'environ 25 à environ 45 degrés au niveau de la première plaque de recouvrement (64) et que les rails de guidage (76) sont disposés sous un angle d'environ 10 à environ 20 degrés au niveau des seconde et troisième plaques de recouvrement (74).

10. Séparateur axial selon une ou plusieurs des revendications précédentes, caractérisé en ce que les zones d'extrémité des plaques de recouvrement (64,74) suivantes sont entourées par des brides de recouvrement (212,216).

11. Séparateur axial selon une ou plusieurs des revendications précédentes, caractérisé en ce que les seconde et troisième plaques de recouvrement (74) sont réalisées de manière à pouvoir être interchangeables.

12. Séparateur axial selon une ou plusieurs des revendications précédentes, caractérisé en ce que les rails de guidage (66,76,200,206,280,210) s'étendent selon une disposition hélicoïdale.

13. Séparateur axial selon une ou plusieurs des revendications précédentes, caractérisé en ce qu'il peut être retiré d'une moissonneuse et peut y être inséré sous la forme d'une unité montée de manière à être déplaçable sur des rails ou analogues.

14. Séparateur axial selon une ou plusieurs des revendications précédentes, caractérisé en ce que des poignées (214) sont montées sur le côté extérieur des seconde et troisième plaques de recouvrement (74).

15. Plaque de recouvrement (64,74) pour une section du carter d'un séparateur axial comportant des rails de guidage (66,76,200,206,208,210), qui ne s'étendent pas au-delà de l'étendue en largeur de la surface enveloppe des plaques de recouvrement (64,74) et s'étendent sur toute la zone de guidage de la section considérée de carter et qui sont disposées sur une surface, tournée vers un rotor, et comportent des brides de fixation (220,222), qui s'étendend dans la direction axiale et vers l'extérieur et sont prévues pour une fixation amovible de la plaque de recouvrement (64,74).

16. Plaque de recouvrement selon la revendication 15, caractérisée en ce qu'au moins une bride de fixation (220,222) s'étend dans la direction axiale du rotor.

17. Plaque de recouvrement selon la revendication 15 ou 16, caractérisée en ce qu'au moins une bride de fixation, qui s'étend axialement, est fixée au carter à l'aide de vis (224,226).

18. Plaque de recouvrement selon une ou plusieurs des revendications précédentes, caractérisée par des brides de recouvrement (212,216) servant à réunir des plaques de recouvrement voisines (64,74) au niveau de leurs extrémités frontales.

19. Plaque de recouvrement selon une ou plusieurs des revendications précédentes, caractérisée par cinq rails de guidage de forme hélicoïdale (66,76,200,206,208,210), qui sont disposés sur la surface de la plaque de recouvrement tournée vers le rotor et dont un premier fait un angle d'environ 45 degrés et les second, troisième et quatrième un angle d'environ 30 degrés et un cinquième un angle d'environ 25 degrés par rapport à un axe qui est perpendiculaire à l'axe de rotation du rotor.

20. Plaque de recouvrement selon une ou plusieurs des revendications 15 à 18, caractérisée par quatre rails de guidage de forme hélicoïdale (76), qui sont montés sur la surface de la plaque de recouvrement, tournée vers le rotor et qui font un angle d'environ 20° par rapport à un axe perpendiculaire à l'axe de rotation du rotor.

21. Plaque de recouvrement selon l'une des revendications 15 à 18, caractérisée par quatre rails de guidage de forme hélicoïdale (76), qui sont disposés sur la surface de la plaque de recouvrement tournée vers le rotor et qui font un angle d'environ 10 degrés par rapport à un axe perpendiculaire à l'axe de rotation du rotor.
